# EUROPEAN PATENT APPLICATION

(11) **EP 4 847 634 A1**
(43) Date of publication of application: **02.12.2026**
(21) Application number: 24920260.7
(22) Date of filing: 04.10.2024
(51) Int. Cl.: C21B 13/00, C21B 13/02, C22B 5/12, C23C 8/22

(54) **METHOD AND SYSTEM FOR PRODUCING REDUCED IRON**

(30) Priority: 26.01.2024 JP 2024010458; 26.01.2024 JP 2024010386
(71) Applicant: Nippon Steel Corporation, Tokyo 100-8071 (JP)
(72) Inventor: TANI, Yoshiki, Tokyo 100-8071 (JP); TOMITA, Katsuyuki, Tokyo 100-8071 (JP); MIZUTANI, Moritoshi, Tokyo 100-8071 (JP)
(74) Representative: Vossius & Partner Patentanwälte Rechtsanwälte mbB
(86) International application number: PCT/JP2024/035644
(87) International publication number: WO 2025/158712

(57) **Abstract**

The art of making the carbon concentration of metallic iron increase while cooling the metallic iron after the reducing step in the direct reduction process to produce reduced iron containing carbon is disclosed. The method for producing reduced iron containing carbon of the present disclosure has a reducing step of making a reducing gas contact iron oxide feedstock to obtain metallic iron and a cooling step of cooling the metallic iron. The cooling step has a first step of making methane gas contact the metallic iron after the reducing step to carburize the metallic iron, a second step of making CO gas contact the metallic iron after the first step to carburize the metallic iron, and a third step of making methane gas or an inert gas contact the metallic iron after the second step.

## Description

### FIELD

The present application discloses a method and system for producing reduced iron.

### BACKGROUND

In the ferrous metal industry, as an alternative technology for the blast furnace method, use of a direct reduction process using a reducing gas is being studied to reduce the amount of emission of CO₂ . For example, as a direct reduction process, a process using a shaft furnace is being studied (for example, PTLs 1 and 2). In a direct reduction process, a reducing gas is made to contact an iron oxide feedstock to obtain reduced iron (direct reduced iron: DRI). Further, for the purpose of cooling the reduced iron and increasing the carbon concentration, sometimes a cooling gas is made to contact the reduced iron. By making the carbon concentration of the reduced iron increase, the melting temperature at the next step of the melting and refining step falls. Further, the strength as steel is secured.

### [CITATION LIST]

### [PATENT LITERATURE]

[PTL 1] WO2021/195160
[PTL 2] Japanese Unexamined Patent Publication No. 61-073805

### SUMMARY

### [TECHNICAL PROBLEM]

As the types of reduced iron products, the three products of cold DRI (CDRI), hot briquetted iron (HBI), and hot DRI (HDRI) may be mentioned. If producing CDRI by a direct reduction process, a technique reducing the iron oxide feedstock to obtain metallic iron, then cooling the metallic iron while increasing its carbon concentration has been sought. In the prior art, when producing reduced iron by a direct reduction process, there is room for improvement in making the carbon concentration of the metallic iron obtained after reduction increase while cooling the metallic iron.

### [SOLUTION TO PROBLEM]

The present application discloses the following several aspects as means for solving the above problem.

### <Aspect 1>

A method for producing reduced iron containing carbon, the method comprising
a reducing step of bringing a reducing gas into contact with iron oxide feedstock to obtain metallic iron and
a cooling step of cooling the metallic iron, wherein
the cooling step includes
   a first step of bringing methane gas into contact with the metallic iron after the reducing step to carburize the metallic iron,
   a second step of bringing CO gas into contact with the metallic iron after the first step to carburize the metallic iron, and
   a third step of bringing methane gas or an inert gas into contact with the metallic iron after the second step.

### <Aspect 2>

The method for producing reduced iron of the aspect 1, wherein
the reducing step and the cooling step are performed in a shaft furnace.

### <Aspect 3>

The method for producing reduced iron of the aspect 1, wherein
the reducing step is performed in a shaft furnace and
the cooling step is performed in a cooling device downstream of the shaft furnace.

### <Aspect 4>

The method for producing reduced iron of the aspect 1, wherein
the reducing step and the first step are performed in a shaft furnace and
the second step and the third step are performed in a cooling device downstream of the shaft furnace.

### <Aspect 5>

The method for producing reduced iron of the aspect 3 or 4, wherein the method includes
a moving step of moving the metallic iron from the shaft furnace to the cooling device.

### <Aspect 6>

The method for producing reduced iron of any of the aspects 1 to 5, wherein
the reducing gas contains hydrogen gas.

### <Aspect 7>

The method for producing reduced iron of any of the aspects 1 to 6, wherein the method includes
a dehydration step of dehydrating discharged gas of the reducing step to obtain a circulating gas and
a heating step of raising a temperature of the circulating gas and hydrogen gas and obtaining a reducing gas containing the circulating gas and the hydrogen gas.

### <Aspect 8>

The method for producing reduced iron of any of the aspects 1 to 7, wherein
a reaction gas of the metallic iron and the methane gas at the first step is discharged outside the system downstream of the reducing step.

### <Aspect 9>

The method for producing reduced iron of any of the aspects 1 to 8, wherein
a reaction gas of the metallic iron and the methane gas at the first step is added to the reducing gas.

### <Aspect 10>

The method for producing reduced iron of any of the aspects 1 to 9, wherein
a reaction gas of the metallic iron and the CO gas at the second step is discharged outside the system downstream of the first step.

### <Aspect 11>

The method for producing reduced iron of any of the aspects 1 to 10, wherein
the methane gas or an inert gas contacting the metallic iron at the third step is discharged outside the system downstream of the second step.

### <Aspect 12>

A system for producing reduced iron containing carbon, the system comprising
a reducing part for bringing a reducing gas into contact with iron oxide feedstock to obtain metallic iron and
a cooling part for cooling the metallic iron, wherein
the cooling part has
   a first part for bringing methane gas into contact with the metallic iron obtained by the reducing part to carburize the metallic iron,
   a second part for bringing CO gas into contact with the metallic iron downstream of the first part to carburize the metallic iron, and
   a third part for bringing methane gas or an inert gas into contact with the metallic iron downstream of the second part.

### <Aspect 13>

The system for producing reduced iron of the aspect 12, wherein
the reducing part and the cooling part are provided at a shaft furnace.

### <Aspect 14>

The system for producing reduced iron of the aspect 12, wherein
the reducing part is provided at a shaft furnace and
the cooling part is provided at a cooling device downstream of the shaft furnace.

### <Aspect 15>

The system for producing reduced iron of the aspect 12, wherein
the reducing part and the first part are provided at a shaft furnace and
the second part and the third part are provided at a cooling device downstream of the shaft furnace.

### <Aspect 16>

The system for producing reduced iron of the aspect 14 or 15, wherein
the system has a moving device for moving the metallic iron from the shaft furnace to the cooling device.

### <Aspect 17>

The system for producing reduced iron of any of the aspects 12 to 16, wherein
the reducing gas contains hydrogen gas.

### <Aspect 18>

The system for producing reduced iron of any of the aspects 12 to 17, wherein the system has
a dehydration device for dehydrating discharged gas from the reducing part to obtain a circulating gas and
a heating device for raising a temperature of the circulating gas and hydrogen gas and obtaining a reducing gas containing the circulating gas and the hydrogen gas.

### <Aspect 19>

The system for producing reduced iron of any of the aspects 12 to 18, wherein
the system has a first cooling gas outlet for discharging the reaction gas of the metallic iron and methane gas at the first part to outside the system downstream of the reducing part.

### <Aspect 20>

The system for producing reduced iron of any of the aspects 12 to 19, wherein
the reducing part and the first part are connected so that the reaction gas of the metallic iron and the methane gas at the first part is added to the reducing gas.

### <Aspect 21>

The system for producing reduced iron of any of the aspects 12 to 20, wherein
the system has a second cooling gas outlet for discharging the reaction gas of the metallic iron and CO gas at the second part to outside the system.

### <Aspect 22>

The system for producing reduced iron of any of the aspects 12 to 21, wherein
the system has a third cooling gas outlet for discharging the methane gas or an inert gas contacting the metallic iron at the third part to outside the system downstream of the second part.

### [ADVANTAGEOUS EFFECTS OF INVENTION]

According to the method and system for producing reduced iron of the present disclosure, in a direct reduction process, it is possible to make the carbon concentration of metallic iron increase while cooling the metallic iron. According to the method and system for producing reduced iron of the present disclosure, for example, it is possible to produce CDRI raised in carbon concentration.

### BRIEF DESCRIPTION OF DRAWINGS

FIG. 1 is a schematic view for explaining one example of a method and system for producing reduced iron.
FIG. 2 is a schematic view for explaining one example of a method and system for producing reduced iron.
FIG. 3 is a schematic view for explaining one example of a method and system for producing reduced iron.
FIG. 4 is a schematic view for explaining one example of a method and system for producing reduced iron.
FIG. 5 is a schematic view for explaining one example of a method and system for producing reduced iron.
FIG. 6 is a schematic view for explaining one example of a method and system for producing reduced iron.
FIG. 7 is a schematic view for explaining one example of a method and system for producing reduced iron.
FIG. 8 is a schematic view for explaining the type of gas introduced into the cooling part of the shaft furnace and the position of introduction for each of the cases 1 to 4.
FIG. 9 is a schematic view for explaining the type of gas introduced into the shaft furnace and cooling tower and the position of introduction for Example 1.
FIG. 10 is a schematic view for explaining the type of gas introduced into the shaft furnace and cooling tower and the position of introduction for Example 2.

### DESCRIPTION OF EMBODIMENTS

Below, one embodiment of the method and system for producing reduced iron will be explained. However, the method for producing and system for producing of reduced iron of the present disclosure are not limited to the following embodiment. Further, in the present application, the "iron oxide feedstock" means feedstock containing iron oxide before a reducing step. "Metallic iron" means an intermediate product up to the end of the cooling step after the reducing step. A material raised in carbon concentration by carburization will also be referred to as "metallic iron" for convenience. "Reduced iron" means the product obtained after the cooling step. Further, in the present application, the "downstream side" means the downstream side in the process for producing reduced iron. That is, the iron oxide feedstock side in the case of producing reduced iron containing carbon from the iron oxide feedstock through metallic iron is the upstream side while the reduced iron containing carbon side is the downstream side.

### 1. Method for Producing Reduced Iron

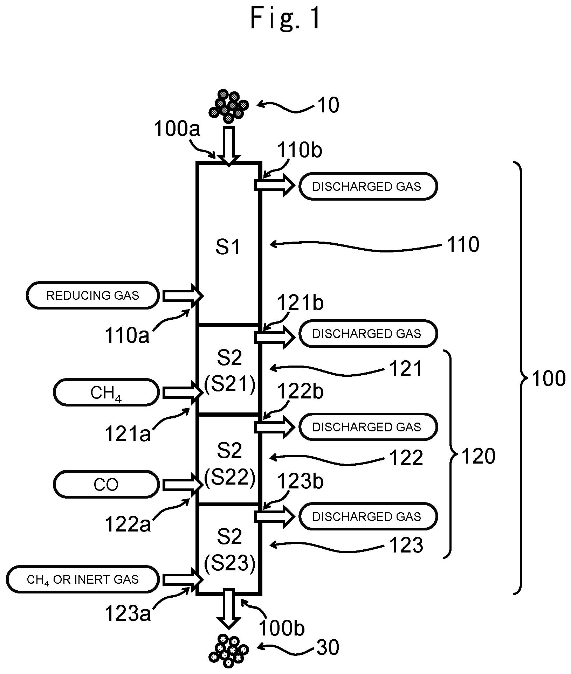

As shown in FIGS. 1 to 7, the method for producing reduced iron containing carbon according to one embodiment has
a reducing step S1 of making a reducing gas contact iron oxide feedstock 10 to obtain metallic iron 20 and
a cooling step S2 of cooling the metallic iron 20.

Here, the cooling step S2 has
a first step S21 of making methane gas contact the metallic iron 20 after the reducing step S1 to carburize the metallic iron 20,
a second step S22 of making CO gas contact the metallic iron 20 after the first step S21 to carburize the metallic iron 20, and
a third step S23 of making methane gas or an inert gas contact the metallic iron 20 after the second step S22.

### 1.1. Reducing Step

At the reducing step S1, a reducing gas is made to contact the iron oxide feedstock 10. Due to this, a reduction reaction occurs and metallic iron 20 is obtained. As shown in FIGS. 1 to 7, the reducing step S1, for example, may be performed inside a shaft furnace 100. Alternatively, the reducing step S1 may be performed at a reducing device other than the shaft furnace 100 (for example, a fluidized bed or rotary kiln). In particular, a high effect can be expected if the reducing step S1 is performed inside the shaft furnace 100.

### 1.1.1. Iron Oxide Feedstock

The iron oxide feedstock 10 contains iron oxide. The iron oxide feedstock 10, for example, may be one or more materials selected from iron ore pellets, iron ore, and sintered ore. The iron oxide feedstock 10 may also contain, in addition to the iron oxide, for example, one or both of silicon dioxide and aluminum oxide. The iron oxide feedstock 10 may be one having a particle size distribution or may be one having a uniform particle size. The average particle size of the iron oxide feedstock 10 may, for example, be 5.0 mm or more and 30.0 mm or less and may be 10.0 mm or more and 15.0 mm or less. Further, the "particle size of the feedstock" means the sieve size of the feedstock while the "average particle size of the feedstock" means the weighted average value of the particle size of the feedstock. Specifically, the average particle size of the feedstock is measured in the following way. That is, it is possible to measure the average particle size of the feedstock by obtaining the particle size distribution based on mass by the dry sieving test described in JIS Z 8815:1995, making the average value of the maximum particle size and minimum particle size of the sieves as the representative particle size, and obtaining the weighted average by the mass. The iron oxide feedstock 10 may be one formed into pellets etc., may be a powder state, may be a lump shape, or may be a shape other than these.

If the reducing step S1 is performed inside the shaft furnace 100, the above iron oxide feedstock 10 is supplied and packed at the inside of the shaft furnace 100 through a feedstock supply opening 100a of the shaft furnace 100 whereby a packed bed can be formed. The packing rate of the packed bed is not particularly limited and may be similar to the packing rate in the conventional method for producing reduced iron using a shaft furnace. The packed bed moves downward inside of the shaft furnace 100. That is, at the inside of the shaft furnace 100, the iron oxide feedstock 10 gradually moves downward by dropping down in a substantially packed state. If focusing on one feedstock particle in the packed bed, that feedstock particle may move continuously toward the bottom at a constant speed or may move intermittently repeating a falling and stopping motion. If focusing on one feedstock particle in the packed bed, the average speed of movement downward of that feedstock particle is not particularly limited. For example, the average speed of movement can be adjusted in accordance with the amount of supply (speed of supply) of the feedstock. When making the packed bed move downward, to prevent bridging, a burden feeder etc. may be used.

### 1.1.2. Reducing Gas

The type of the reducing gas need only be one which can reduce the iron oxide feedstock 10 and is not particularly limited. In particular, if the reducing gas contains hydrogen gas, a much more remarkable effect by the art of the present disclosure can be expected. The hydrogen gas, for example, can be obtained by electrolysis of water, obtained by separation (for example, membrane separation) from synthesis gas (gas formed from coal or biomass gasified (partially oxidized) by steam, air, or oxygen ), obtained by separation from gas obtained by reforming natural gas by steam, carbon dioxide, obtained by separation from dry distillation gas (gas obtained by heating coal or a biomass in an oxygen-free state), etc. The reducing gas may contain a gas besides hydrogen in addition to the hydrogen gas. As the gas besides hydrogen, CO gas, inert gas, CO₂ gas, steam, etc. may be mentioned. As the inert gas, nitrogen gas, argon gas, etc. may be mentioned. If the reducing gas contains hydrogen gas, the hydrogen concentration of the reducing gas may, for example, be 40 vol% or more and 100 vol% or less, 50 vol% or more and 100 vol% or less, 60 vol% or more and 100 vol% or less, 70 vol% or more and 100 vol% or less, or 80 vol% or more and 100 vol% or less. The supply temperature of the reducing gas (temperature right before contacting the iron oxide feedstock 10) need only be a temperature at which a reduction reaction with iron oxide occurs. For example, it may also be 700°C or more. The temperature of the reducing gas is preferably 800°C or more and 1100°C or less.

If the reducing step S1 is performed inside the shaft furnace 100, the reducing gas can be supplied from the side wall of the shaft furnace 100 to the inside of the furnace. The system for supplying the reducing gas is not particularly limited. For example, it is possible to connect piping etc. to reducing gas supply openings 110a provided at the side wall of the shaft furnace 100 and supply reducing gas through the piping etc. from the outside to the inside of the furnace.

### 1.1.3. Metallic Iron

By at least part of the iron oxide contained in the iron oxide feedstock 10 being reduced in the reducing step S1, a solid reaction product containing metallic iron 20 is obtained. The solid reaction product may also contain, in addition to metallic iron 20, iron oxide remaining without being reduced, silicon dioxide, aluminum oxide, etc. The temperature of the metallic iron 20 right after reduction may, for example, be 700°C or more. The upper limit of the temperature of the metallic iron 20 right after reduction is not particularly limited. The temperature may be any one where the later explained cooling step S2 can be performed. The temperature of the metallic iron 20 right after reduction may, for example, be 1100°C or less.

If the reducing step S1 is performed inside the shaft furnace 100, the solid reaction product containing the metallic iron 20 can be recovered from an outlet 100b provided at the bottom part of the shaft furnace 100 (below position of supply of reducing gas).

### 1.1.4. Shaft Furnace

If the reducing step S1 is performed at the inside of the shaft furnace 100, the shape of the body of the shaft furnace 100 may be similar to the shape of the body of a known shaft furnace. For example, the body of the shaft furnace 100 may have a tubular part (cylindrical part) comprised of a furnace top part, furnace bottom part, and a side wall between the furnace top part and furnace bottom part. In that case, the tubular part may have a barrel part and a constricted part provided lower than the barrel part. At the constricted part, the inside diameter of the furnace may be constricted from the top toward the bottom. The shaft furnace 100 may be provided with a burden feeder etc. for preventing bridging of the packed bed of the feedstock when the packed bed is made to move downward at the inside. Further, the shaft furnace 100 may also be provided below the reducing gas supply openings 110a with supply openings 121a, 122a, 123a for supplying various types of cooling gas and outlets 121b, 122b, 123b for discharging various types of cooling gas. The supply openings of the various types of supply openings may be provided at the side wall of the furnace and may be provided at the inside from the side wall of the furnace. The outlets of the various types of cooling gas may be provided at the side wall of the furnace. Further, the shaft furnace 100 may be provided with a feedstock supply opening 100a at the furnace top part or furnace bottom part and may be provided with an outlet 100b for recovering the metallic iron or reduced iron at the furnace lower part or furnace bottom part.

### 1.2. Cooling Step

The temperature of the metallic iron 20 right after performing the reducing step S1 is, for example, about 700°C to 900°C. At the cooling step S2, by making a gas contact such a high temperature metallic iron 20, the metallic iron 20 is cooled and the metallic iron 20 is carburized. That is, reduced iron 30 containing carbon is obtained. In this way, by carburizing the metallic iron 20 to obtain reduced iron 30 containing carbon, the melting temperature at the next step of the melting and refining step falls and further the strength as steel is secured.

At the cooling step S2, (1) the metallic iron 20 is carburized and cooled by methane gas, then (2) the metallic iron 20 is carburized by CO gas, next (3) the metallic iron 20 is cooled by methane gas or an inert gas. According to the findings of the inventors, the carbon precipitation reaction by methane gas easily proceeds in a high temperature region of 700°C or more and is an endothermic reaction. On the other hand, the carbon precipitation reaction by CO gas most easily proceeds at 400°C or more and 600°C or less and is an exothermic reaction. At the cooling step S2, by first making methane gas contact the high temperature metallic iron 20 obtained at the reducing step S1, the endothermic reaction of the carbon precipitation reaction suitably and efficiently proceeds. Further, due to the physical heat absorption due to contact with the large specific heat methane gas plus the endothermic reaction at the time of carbon precipitation, the temperature of the metallic iron 20 easily falls to a suitable temperature due to the CO gas. By making CO gas contact the metallic iron 20 fallen in temperature in that way, the exothermal reaction of the carbon precipitation reaction suitably and efficiently proceeds whereupon the concentration of carbon contained in the reduced iron 30 finally obtained can be made to greatly rise. At that time, the temperature of the metallic iron 20 may fall or may rise. For example, if the temperature of the CO gas is low, the temperature drop due to contact with CO gas becomes greater than the temperature rise due to the exothermic reaction and the temperature of the metallic iron 20 falls. After that, by making methane gas or an inert gas contact the metallic iron 20, it is possible to lower the temperature of the metallic iron 20 down to a temperature where reoxidation is difficult and reduced iron 30 containing carbon (for example, CDRI containing carbon) is obtained. As explained above, at the cooling step S2, by going through (1) carburization by methane gas and (2) carburization by CO gas in that order, the carbon concentration in the reduced iron 30 rises compared with the case of causing contact of these gases individually. Due to (1) and (2), the carbon concentration sufficiently rises, therefore (3) cooling by methane gas or an inert gas does not have to be accompanied with carbon precipitation. However, (3) cooling by methane gas or an inert gas may also be accompanied with carbon precipitation.

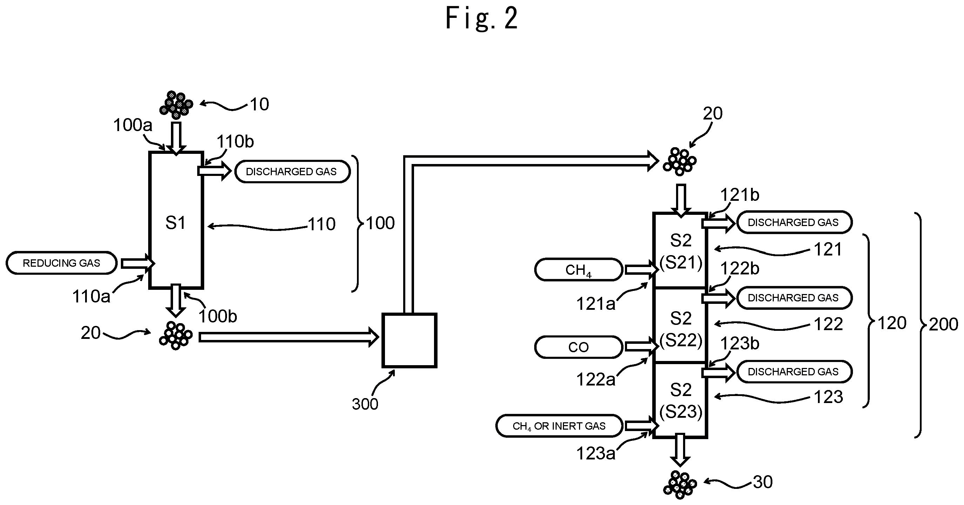

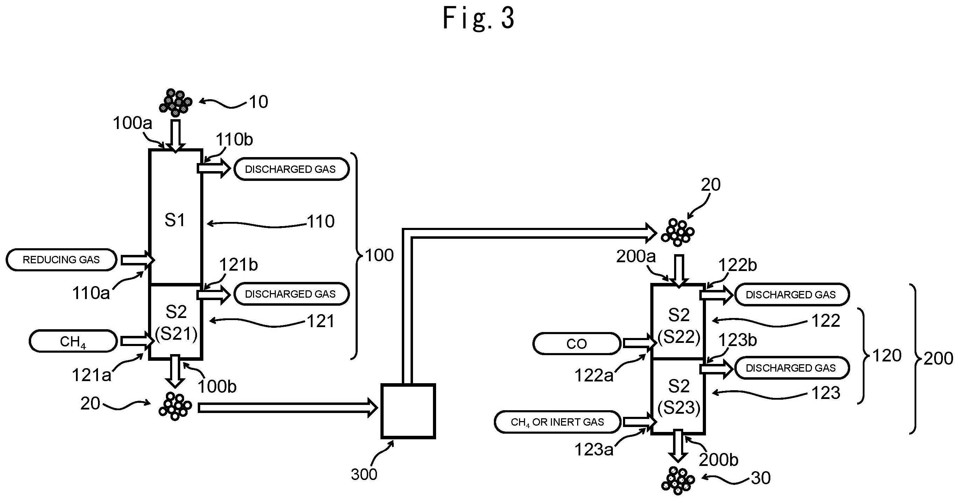

If the reducing step S1 is performed inside the shaft furnace, the cooling step S2 may be performed inside the shaft furnace and may be performed outside the shaft furnace. That is, as shown in FIG. 1, the reducing step S1 and cooling step S2 may also be performed inside the shaft furnace 100. Alternatively, as shown in FIG. 2, the reducing step S1 may be performed inside the shaft furnace 100 and the cooling step S2 may be performed at a cooling device 200 provided at the downstream side from the shaft furnace 100. Alternatively, as shown in FIG. 3, the reducing step S1 and the first step S21 of the cooling step S2 may be performed inside the shaft furnace 100 while the second step S22 and third step S23 of the cooling step S2 may be performed at the cooling device 200 provided at the downstream side from the shaft furnace 100. From the viewpoint of keeping down capital costs etc., the reducing step S1 and cooling step S2 are preferably performed inside the shaft furnace 100. On the other hand, if part or all of the cooling step S2 is performed at the cooling device 200, it is possible to avoid discharged gas at the cooling device 200 entering the shaft furnace 100. For example, if the reducing step S1 and the first step S21 of the cooling step S2 are performed inside the shaft furnace 100 and the second step S22 and third step S23 of the cooling step S2 are performed at the cooling device 200 provided at the downstream side from the shaft furnace 100, the discharged gas from the second step S22 (containing CO gas or CO₂ gas) entering the first step S21 is avoided. Due to this, it is possible to make the carbon precipitation reaction at the first step S21 proceed more efficiently. Further, circulation of exhaust gas from the reducing step S1 (recovery of hydrogen) becomes easy. Further, CO₂ can be efficiently recovered from the second step S22. As shown in FIGS. 2 and 3, if part or all of the cooling step is performed at the cooling device 200 provided at the downstream side of the shaft furnace 100, the method for producing reduced iron may also include a moving step for making the metallic iron 20 move from the shaft furnace 100 to the cooling device 200. Specifically, the metallic iron 20 recovered from the outlet 100b of the shaft furnace 100 can be moved to the metallic iron supply opening 200a of the cooling device 200. If part or all of the cooling step S2 is performed in the cooling device 200 provided at the downstream side from the shaft furnace 100, as a specific example of the cooling device 200, a cooling tower may be mentioned. The speed of supply of the metallic iron 20 to the cooling device 200 is not particularly limited. The metallic iron 20 supplied inside the cooling device 200 may form a packed bed inside the cooling device 200 or may be in a state floating in the gas flow. In particular, a higher effect can be expected if the metallic iron 20 supplied inside of the cooling device 200 forms a packed bed inside the cooling device 200.

The cooling step S2 has a first step S21, second step S22, and third step S23. Further, in the present embodiment, it is sufficient that the temperature of the reduced iron 30 at the time of the end of the cooling step S2 falls from the temperature of the metallic iron 20 at the time of start of the cooling step S2. In the middle of the cooling step S2, the temperature of the metallic iron 20 may also rise. For example, at the second step S22, an exothermic reaction may occur between the metallic iron 20 and the CO gas and the temperature of the metallic iron 20 may rise.

### 1.2.1. First Step

The first step S21 corresponds to the above (1). That is, at the first step S21, after the above reducing step S1, methane gas is made to contact the metallic iron 20 and the metallic iron 20 is carburized. The metallic iron 20 is partially carburized. If the reducing step S1 is performed inside the shaft furnace, the first step S21 may be performed inside the shaft furnace or may be performed outside the shaft furnace (for example, the cooling device provided at the downstream side from the shaft furnace). At the first step S21, the temperature of the metallic iron 20 when contacting the methane gas is not particularly limited so long as the carbon precipitation reaction by methane gas can proceed. At the first step S21, for example, it is possible to make the methane gas contact the metallic iron 20 of 700°C or more to thereby make the carbon precipitation reaction by the methane gas proceed more suitably and possible to suitably cool the metallic iron 20. At the first step S21, the upper limit of the temperature of the metallic iron 20 contacted by the methane gas is not particularly limited. The temperature of the metallic iron 20 contacted by the methane gas may, for example, be 1100°C or less. The temperature of the metallic iron 20 contacted by methane gas at the first step S21 may, from the viewpoint of making the carbon precipitation reaction by methane gas proceed particularly remarkably, be 710°C or more and 1100°C or less, 730°C or more and 1100°C or less, 750°C or more and 1100°C or less, 770°C or more and 1100°C or less, 790°C or more and 1100°C or less, 810°C or more and 1100°C or less, 700°C or more and 1070°C or less, 700°C or more and 1040°C or less, 700°C or more and 1000°C or less, 700°C or more and 970°C or less, 700°C or more and 940°C or less, 700°C or more and 900°C or less, 710°C or more and 1070°C or less, 730°C or more and 1040°C or less, 750°C or more and 1000°C or less, 770°C or more and 970°C or less, 790°C or more and 940°C or less, or 810°C or more and 900°C or less. Note that, the "temperature of the metallic iron 20" at the first step S21 is the average temperature in the radial direction of the shaft furnace or the cooling tower. If the reducing step S1 and the first step S21 are performed by the same device (for example, shaft furnace), the position (height position) P1 when measuring the "temperature of the metallic iron" at the first step S21 is downstream (downward) from the position (height position) P2 where the reducing gas is blown at the reducing step S1 and a position (height position) within 1 m from the position P2. Alternatively, if the reducing step S1 and the first step S21 are performed by separate devices (for example, the reducing step S1 is performed at the shaft furnace and the first step S21 is performed by the cooling device provided at the downstream side from the shaft furnace), the position P1 when measuring the "temperature of the metallic iron 20" at the first step S21 is made a position within 1 m downstream (downward) from the metallic iron supply opening of the device where the first step S21 is performed. The average temperature of the metallic iron 20 in the radial direction can, for example, be identified by arranging rod shaped members in the radial direction of the shaft furnace or the cooling tower, providing a plurality of thermocouples at the members, and measuring a plurality of temperatures in the radial direction. That is, if the first step S21 is performed inside the shaft furnace, the plurality of thermocouples arranged in the radial direction of the shaft furnace are used to identify the average temperature of the metallic iron 20 in the radial direction. Further, if the first step S21 is performed inside the cooling tower, the average temperature of the metallic iron 20 in the radial direction is identified by the plurality of thermocouples arranged in the radial direction of the cooling tower. Here, for example, if assuming that the temperatures between points measured are linearly distributed in the radial direction, the temperature distribution T(r) in the radial direction can be expressed by a combination of linear functions of "r". At this time, the average temperature T_{a v e} is defined by the following formula where, when measuring the temperature at N points, the radius of the measured points "i" (i=1 to N) is rᵢ . Further, the points corresponding to r₀ , r_{N + 1} are the furnace center (r₀ =0) and the furnace wall (r_{N + 1} =R). The temperatures of those points are found by extrapolation. According to such a method, even if a temperature distribution is formed in the radial direction, by obtaining the average of a plurality of measured temperatures, it is possible to identify this as the average temperature in the radial direction. The number of the thermocouples is not particularly limited, but, for example, five or more are preferably arranged. At the first step S21, the temperature of the methane gas contacting the metallic iron 20 is not particularly limited. The temperature of the methane gas, for example, may be 25°C or more and 600°C or less. [Mathematical 1] ${T}_{ave} = \frac{2 π {\sum }_{i = 0}^{N} {\int }_{{r}_{i}}^{{r}_{i + 1}} rT \left(r\right) dr}{{πR}^{2}}$

At the first step S21, it is sufficient that the metallic iron 20 proceed to be carburized by the carbon precipitation reaction by methane gas. Another gas may be made to contact the metallic iron 20 along with methane gas. In other words, the gas contacting the metallic iron 20 at the first step S21 need only contain methane gas. The gas contacting the metallic iron 20 at the first step S21 may contain, in addition to methane gas, hydrogen gas, nitrogen gas, CO gas, CO₂ gas, steam, etc. The gas contacting the metallic iron 20 at the first step S21 may, for example, also be natural gas. Further, as explained above, at the first step S21, the carbon precipitation reaction by the methane gas (endothermic reaction) causes the temperature of the metallic iron 20 to fall. At the first step S21, so long as such an endothermic reaction by methane gas proceeds predominantly, part of the gas contacting the metallic iron 20 may contain a gas accompanied with an exothermic reaction (for example, CO gas). However, if the gas contacting the metallic iron 20 at the first step S21 contains CO gas, the volume ratio of the CO gas is smaller than the volume ratio of the methane gas. Further, if the gas contacting the metallic iron 20 at the first step S21 is comprised of a plurality of types of gas, for example, among the volume ratios of the different gases, the volume ratio of the methane gas is the greatest. The gas contacting the metallic iron 20 at the first step S21, for example, contains methane gas in 50 vol% or more, 60 vol% or more, or 70 vol% or more.

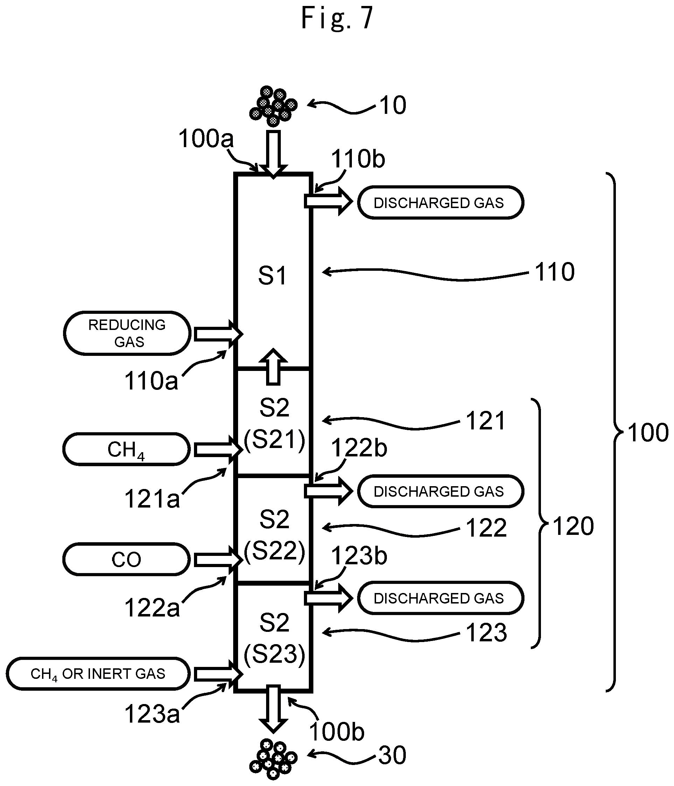

The reaction gas of the metallic iron 20 and the methane gas at the first step S21 can contain methane gas and hydrogen gas. The reaction gas may be discharged outside the system as discharged gas and utilized as fuel and may be utilized as part of the above-mentioned reducing gas. For example, as shown in FIGS. 1 to 6, the reaction gas of the metallic iron 20 and methane gas at the first step S21 may also be discharged out of the system at the downstream side from the reducing step S1. Alternatively, as shown in FIG. 7, the reaction gas of the metallic iron 20 and methane gas at the first step S21 may also be added to the above-mentioned reducing gas. In other words, the reaction gas of the metallic iron 20 and methane gas at the first step S21 may be supplied to the reducing step S1. In particular, by the reaction gas at the first step S21 being added to the above reducing gas, it is possible to reduce the amount of use of the reducing gas while enabling efficient operation.

### 1.2.2. Second Step

The second step S22 corresponds to the above (2). That is, at the second step S22, after the first step S21, CO gas is made to contact the metallic iron 20 whereby the metallic iron 20 is carburized. The metallic iron 20 is partially carburized. If the reducing step S1 is performed inside the shaft furnace, the second step S22 may be performed inside the shaft furnace or may be performed outside the shaft furnace (for example, the cooling device provided at the downstream side from the shaft furnace). Further, when the first step S21 is performed outside the shaft furnace, the second step S22 also inevitably is performed outside the shaft furnace. At the second step S22, the temperature of the metallic iron 20 at the time of contact with the CO gas is not particularly limited so long as the carbon precipitation reaction due to the CO gas can proceed. At the second step S22, for example, by making CO gas contact the metallic iron 20 of 400°C or more and 600°C or less, it is possible to make the above carbon precipitation reaction due to the CO gas proceed much more suitably. The temperature of the metallic iron 20 which the CO gas contacts at the second step S22 may, from the viewpoint of making the carbon precipitation reaction due to the CO gas proceed particularly remarkably, be 410°C or more and 600°C or less, 420°C or more and 600°C or less, 430°C or more and 600°C or less, 440°C or more and 600°C or less, 450°C or more and 600°C or less, 400°C or more and 590°C or less, 400°C or more and 580°C or less, 400°C or more and 570°C or less, 400°C or more and 560°C or less, 400°C or more and 550°C or less, 410°C or more and 590°C or less, 420°C or more and 580°C or less, 430°C or more and 570°C or less, 440°C or more and 560°C or less, or 450°C or more and 550°C or less. Note that, the "temperature of the metallic iron 20" at the second step S22, like at the first step S21, is the average temperature in the radial direction of the shaft furnace or the cooling tower. That is, when the second step S22 is performed inside the shaft furnace, the plurality of thermocouples arranged in the radial direction of the shaft furnace are used to identify the average temperature of the metallic iron 20 in the radial direction. Further, when the second step S22 is performed in the cooling tower, the plurality of thermocouples arranged in the radial direction of the cooling tower are used to identify the average temperature of the metallic iron 20 in the radial direction. When the first step S21 and the second step S22 are performed by the same device (for example, shaft furnace), the position (height position) P3 when measuring the "temperature of the metallic iron 20" at the second step S22 is downstream (downward) from the position (height position) P4 where the methane gas is blown at the first step S21 and a position (height direction) within 1 m from that position P4. Alternatively, when the first step S21 and the second step S22 are performed at separate devices (for example, the first step S21 is performed at the shaft furnace and the second step S22 is performed by a cooling device provided at the downstream side from the shaft furnace), the position P3 when measuring the "temperature of the metallic iron 20" at the second step S22 is made a position within 1 m downstream (downward) from the metallic iron supply opening of the device at which the second step S22 is performed. At the second step S22, the temperature of the CO gas contacting the metallic iron 20 is not particularly limited. The temperature of the CO gas may, for example, be 25°C or more and 400°C or less. If the temperature of the CO gas is in that range, due to the temperature rise due to the exothermic reaction, the drop in temperature due to contact with the CO gas becomes predominant and at the second step S22, the temperature of the metallic iron 20 falls.

At the second step S22, it is sufficient that carburization of the metallic iron 20 proceed due to the carbon precipitation reaction by the CO gas. Another gas may also be made to contact the metallic iron 20 together with the CO gas. In other words, at the second step S22, the gas contacting the metallic iron 20 need only contain the CO gas. At the second step S22, the gas contacting the metallic iron 20 may also contain nitrogen gas, hydrogen gas, CO₂ gas, etc. in addition to the CO gas. At second step S22, the gas contacting the metallic iron 20 may, for example, also be a converter gas (LDG). Further, at second step S22, if the gas contacting the metallic iron 20 contains methane gas, the volume ratio of that methane gas is smaller than the volume ratio of the CO gas. Further, at the second step S22, if the gas contacting the metallic iron 20 is comprised of a plurality of types of gases, for example, among the volume ratios of the gases, the volume ratio of the CO gas is the largest. At the second step S22, the gas contacting the metallic iron 20 contains, for example, the CO gas in 50 vol% or more, 60 vol% or more, or 70 vol% or more.

The reaction gas of the metallic iron 20 and CO gas at the second step S22 can contain CO and CO₂ gas. The reaction gas may be discharged out of the system and utilized as fuel. It may also be utilized as part of the cooling gas at the above-mentioned first step S21. In particular, as shown in FIGS. 1 to 7, the reaction gas of the metallic iron 20 and CO gas at the second step S22 is discharged out of the system at the downstream side from the first step S21 whereby the endothermic reaction by the methane gas can be made to proceed more suitably and effective operation becomes possible.

### 1.2.3. Third Step

The third step S23 corresponds to the above (3). That is, at the third step S23, after the second step S22, methane gas or an inert gas is made to contact the metallic iron 20. If the reducing step S1 is performed inside of the shaft furnace, the third step S23 may be performed inside of the shaft furnace or may be performed outside of the shaft furnace (for example, at the cooling device provided at the downstream side from the shaft furnace). Further, if the second step S22 is performed outside of the shaft furnace, the third step S23 is inevitably performed outside the shaft furnace. As explained above, the carbon precipitation reaction at the second step S22 is an exothermic reaction, therefore it is difficult for the temperature of the metallic iron 20 right after the second step S22 to become a suitable temperature as CDRI. In other words, the metallic iron 20 right after the second step S22 is in a readily reoxidized state. By performing the third step S23 after the second step S22, the temperature of the metallic iron 20 can fall to a temperature suitable as CDRI. At the third step S23, the temperature of the metallic iron 20 when contacted by methane gas or an inert gas is not particularly limited. At the third step S23, for example, the temperature of the metallic iron 20 may be made to fall to a temperature suitable as CDRI by making methane gas or an inert gas contact the metallic iron 20 of less than 400°C. Note that, the "temperature of the metallic iron 20" at the third step S23, in the same way as the first step S21 and the second step S22, is the average temperature in the radial direction of the shaft furnace or the cooling tower. That is, when the third step S23 is performed inside the shaft furnace, the plurality of thermocouples arranged in the radial direction of the shaft furnace are used to identify the average temperature of the metallic iron 20 in the radial direction. Further, when the third step S23 is performed inside the cooling tower, the plurality of thermocouples arranged in the radial direction of the cooling tower are used to identify the average temperature of the metallic iron 20 in the radial direction. When the second step S22 and the third step S23 are performed by same device (for example, shaft furnace), the position P5 (height direction) when measuring the "temperature of the metallic iron 20" at the third step S23 is made a position downstream (downward) from the position (height position) P6 where the CO gas is blown at the second step S22 and a position (height position) within 1 m from that position P6. Alternatively, when the second step S22 and the third step S23 are performed by separate devices (for example, the second step S22 is performed at the shaft furnace and the third step S23 is performed at the cooling device provided at a downstream side from the shaft furnace), the position P5 when measuring the "temperature of the metallic iron 20" at the third step S23 is made a position within 1 m downstream (downward) from the metallic iron supply opening of the device at which the third step S23 is performed. At the third step S23, the temperature of the methane gas or an inert gas contacting the metallic iron 20 is not particularly limited. The temperature of the methane gas or an inert gas may also be, for example, 25°C or more and 100°C or less.

At the third step S23, it is sufficient that the cooling of the metallic iron 20 by methane gas or an inert gas proceed. Another gas may also be made to contact the metallic iron 20 along with methane gas or an inert gas. In other words, the gas contacting the metallic iron 20 at the third step S23 need only be one containing methane gas or an inert gas. At the third step S23, the gas contacting the metallic iron 20 may also contain hydrogen gas, steam, etc. in addition to methane gas or an inert gas. If the gas contacting the metallic iron 20 at the third step S23 contains methane gas, while depending also on the temperature of the metallic iron 20, sometimes the metallic iron 20 can be further carburized. As the inert gas at the third step S23, for example, nitrogen gas or another gas not substantially reacting with metallic iron 20 may be mentioned. If there are a plurality of types of gases contacting the metallic iron 20 at the third step S23, for example, among the volume ratios of the gases, the volume ratio of methane gas or the volume ratio of the inert gas is the greatest. For example, the gas contacting the metallic iron 20 at the third step S23 contains methane gas in 50 vol% or more, 60 vol% or more, or 70 vol% or more. Alternatively, it contains the inert gas in 50 vol% or more, 60 vol% or more, or 70 vol% or more or methane gas and the inert gas in a total of 50 vol% or more, 60 vol% or more, or 70 vol% or more.

If employing methane gas at the third step S23, the discharged gas at the third step S23 can contain methane gas and hydrogen gas. The discharged gas may also be discharged outside of the system and utilized as fuel, may also be utilized as part of the above-mentioned reducing gas, may also be utilized as part of the gas at the above-mentioned first step S21, and may also be utilized as part of the gas at the above-mentioned second step S22. On the other hand, if employing an inert gas at the third step S23, the discharged gas of the third step S23 can contain the inert gas. The discharged gas may be discharged outside the system or may be reutilized as the inert gas at the third step S23. For example, as shown in FIGS. 1 to 7, the methane gas or the inert gas contacting the metallic iron 20 at the third step S23 may be discharged outside the system at the downstream side from the second step S22.

### 1.3. Reduced Iron

By going through the above reducing step S1 and cooling step S2, reduced iron 30 containing carbon (for example, CDRI with a raised carbon concentration) is produced. The reduced iron 30 containing carbon may contain, in addition to carbon and iron, iron oxide remaining without being reduced, silicon dioxide, aluminum oxide, etc. The carbon content of the reduced iron 30, for example, may be more than 0 mass% and 5 mass% or less. The temperature of the reduced iron 30 right after the third step S23 (temperature of reduced iron 30 at exit side of third step S23) may, for example, be 150°C or less or 80°C or less. When the reducing step S1 and cooling step S2 are performed inside the shaft furnace 100, the reduced iron 30, for example, can be recovered from the outlet 100b provided at the bottom part of the shaft furnace 100. If part or all of the cooling step S2 is performed at the cooling device 200, the reduced iron 30 can, for example, be recovered from an outlet 200b provided at the bottom part of the cooling device 200.

### 1.4. Dehydration Step and Heating Step

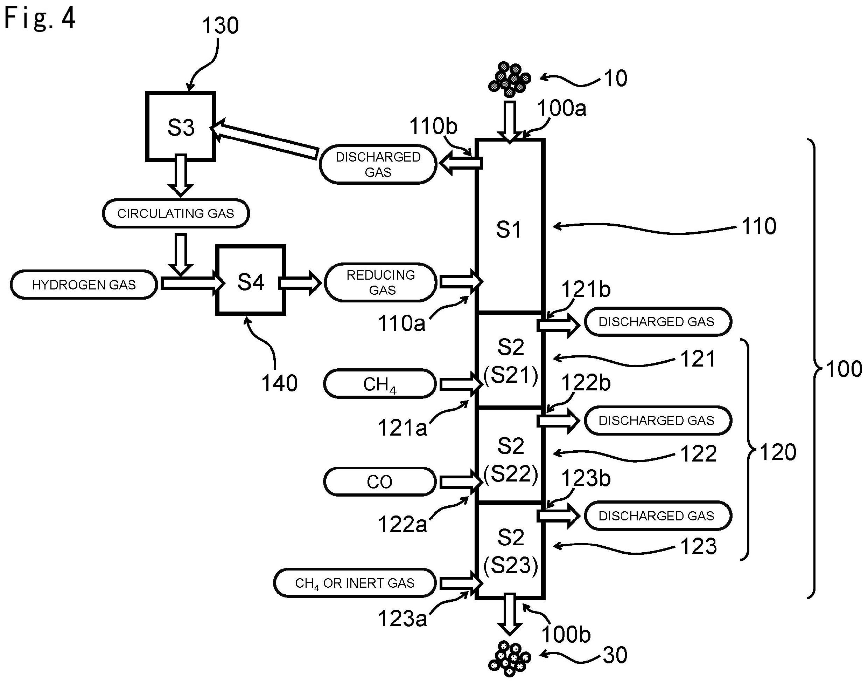

The method for producing reduced iron according to the present embodiment may be one provided with other steps in addition to the above-mentioned reducing step S1 and cooling step S2. For example, the method for producing reduced iron according to one embodiment may also have a dehydration step S3 for dehydrating the discharged gas of the reducing step S1 to obtain a circulating gas. Further, the method for producing reduced iron according to one embodiment may be one having a heating step S4 for raising the temperature of the discharged gas of the reducing step S1 or raising the temperature of the circulating gas obtained by dehydrating the discharged gas. Further, the heating step S4 may also be a step of raising the temperature of the discharged gas of the reducing step S1 or the circulating gas obtained by dehydrating that discharged gas and hydrogen gas and obtaining a reducing gas containing one or both of the discharged gas and circulating gas and hydrogen gas. Further, the above-mentioned dehydration step S3 and heating step S4 may be combined. For example, as shown in FIG. 4, the method for producing reduced iron according to one embodiment may also be one having the dehydration step S3 for dehydrating the discharged gas of the reducing step S1 to obtain a circulating gas and the heating step S4 for raising the temperature of the circulating gas and hydrogen gas to obtain a reducing gas containing the circulating gas and hydrogen gas.

### 1.4.1. Dehydration Step

At the dehydration step S3, the discharged gas of the reducing step S1 is dehydrated and a circulating gas is obtained. The dehydration may be performed by a known dehydration device 130. At the reducing step S1, water can be produced by a reaction of the reducing gas and the iron oxide feedstock 10. On the other hand, at the reducing step S1, the reducing gas does not necessarily have to be used 100%. That is, the discharged gas of the reducing step S1 has water and the reducing gas remaining in it. By dehydrating such a discharged gas, circulating gas containing the reducing gas is obtained.

### 1.4.2. Heating Step

The circulating gas obtained by the dehydration step S3 contains the reducing gas, but the amount is not sufficient. Further, the circulating gas obtained by the dehydration step S3 is low in temperature, therefore utilizing it as is for the reducing step S1 is not efficient. For this reason, at the heating step S4, for example, the circulating gas and hydrogen gas are raised in temperature to obtain a reducing gas containing the circulating gas and hydrogen gas. In other words, the reducing gas is obtained by the circulating gas and the hydrogen gas used as makeup gas being raised in temperature and mixed. At the heating step S4, the circulating gas and hydrogen gas may be raised in temperature, then mixed or the circulating gas and hydrogen gas may be mixed, then raised in temperature. The hydrogen gas may be one obtained by electrolysis of water or membrane separation etc. from synthesis gas (gas obtained by steam reforming or partial combustion of coal or biomass). The heating step S4 need only be performed by a known temperature raising device (heating device) 140.

### 1.5. Hydrogen Gas Separation Step

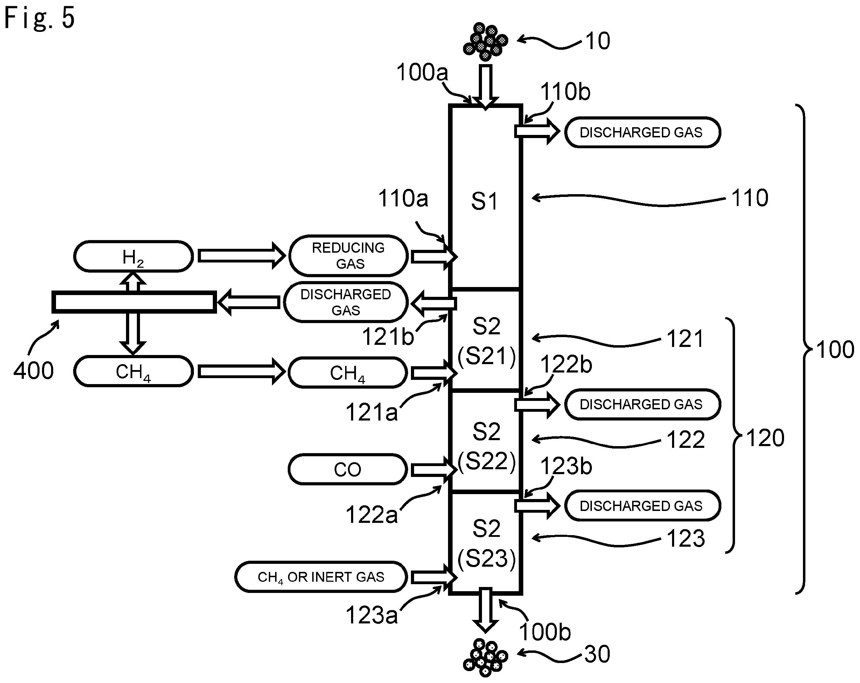

As shown in FIG. 5, the method for producing reduced iron according to one embodiment may also have a hydrogen gas separation step for separating the hydrogen gas contained in the discharged gas of the first step S21. Due to this, for example, it is possible to separate the hydrogen gas and methane gas contained in the discharged gas of the first step S21. The hydrogen gas separated from the discharged gas can, for example, be utilized as part of that reducing gas. Further, the methane gas separated from the discharged gas can, for example, be utilized as part of the methane gas at the above first step S21. The hydrogen gas separation step can be performed by a known hydrogen gas separation device 400. The configuration of the hydrogen gas separation device 400 is not particularly limited.

### 1.6. CO₂ Gas Separation Step

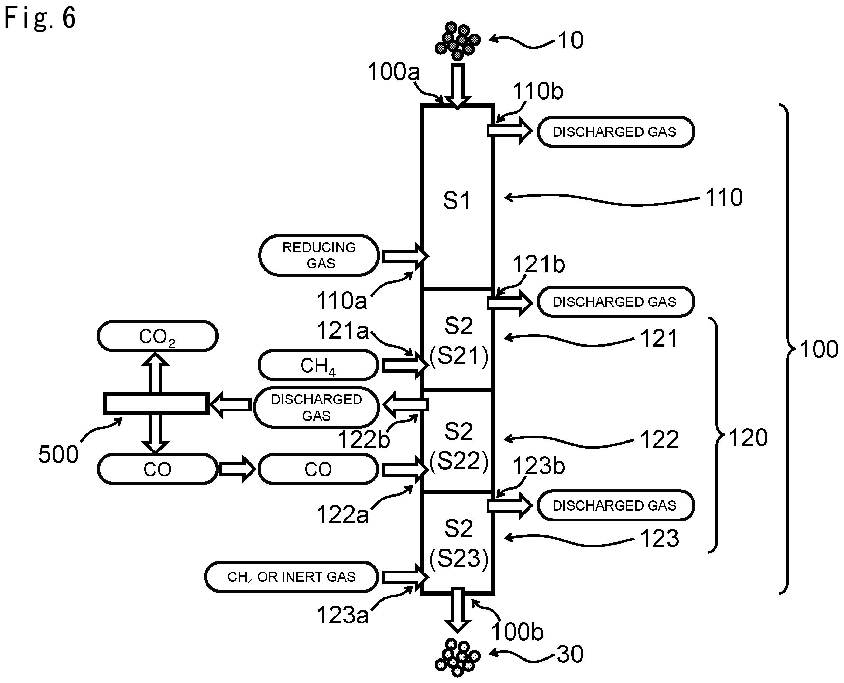

As shown in FIG. 6, the method for producing reduced iron according to one embodiment is provided with a CO₂ gas separation step which separates the CO₂ gas contained in the discharged gas of the second step S22. Due to this, for example, it is possible to separate the CO₂ gas and CO gas contained in the discharged gas of the second step S22. The CO gas separated from the discharged gas can, for example, be utilized as the CO gas in the above second step S22. Further, the CO₂ gas separated from the discharge gas can be discharged out of the system and be recovered by a CO₂ recovery device etc. The CO₂ gas separation step can be performed by a known CO₂ gas separation device 500. The configuration of the CO₂ gas separation device 500 is not particularly limited.

### 1.7. Other Matters

As explained above, in the method for producing reduced iron according to one embodiment, the reducing step S1 and cooling step S2 may also be performed inside the shaft furnace 100. In this case, for example, the first step S21 is performed at the further bottom part than the reducing step S1 of the inside of the shaft furnace 100. In this case, as shown in FIG. 7, the reaction gas of the metallic iron 20 and methane gas at the first step S21 can rise as it is inside the furnace to be added to the reducing gas at the reducing step S1 and utilized for reduction. Further, as shown in FIGS. 1 to 7, the reaction gas of the metallic iron 20 and CO gas at the second step S22 may be discharged out of the system at the downstream side from the first step S21. Due to these configurations, the CO gas or CO₂ gas discharged from the second step S22 is eliminated from the reducing step S1. That is, the CO gas or CO₂ gas no longer enters the discharged gas of the reducing step S1 and the discharged gas of the reducing step S1 easily becomes comprised of only the reducing gas (for example, hydrogen gas) and steam. By subjecting such a discharged gas to the dehydration step S3, reuse as a reducing gas is possible. Note that, the reaction gas of the metallic iron 20 and methane gas at the first step S21 has methane gas remaining in it, but the methane gas can be broken down in the reduction zone. Further, the methane gas merges with other gas in the reduction zone to be diluted. That is, the discharged gas of the reducing step S1 does not contain almost any methane gas. Even if contained, it is 1 vol% or so. For this reason, there is almost no effect due to concentration of a carbon-containing gas along with circulation. In other words, the usual partial step of discharge out of the same alone may be used to deal with this. No special CO₂ removal step etc. when circulating the discharged gas is needed.

In the method for producing the present disclosure, the aspects shown in FIGS. 1 to 7 may be combined. For example, in the method of production shown in FIGS. 1 to 3, a dehydration step S3 or heating step S4 such as shown in FIG. 4 may be performed, a hydrogen gas separation step such as shown in FIG. 5 may be performed, a CO₂ gas separation step such as shown in FIG. 6 may be performed, a reaction gas of the metallic iron 20 and methane gas at the first step S21 such as shown in FIG. 7 may be raised in temperature as is in the furnace and added to the reducing gas at the reducing step S1, or combinations of these may be performed.

### 2. System for Production of Reduced Iron

The art of the present disclosure also has an aspect as a system for production of reduced iron containing carbon. That is, as shown in FIGS. 1 to 7, the system for production of reduced iron containing carbon of one embodiment comprises
a reducing part 110 for making a reducing gas contact iron oxide feedstock 10 to obtain metallic iron 20 and
a cooling part 120 for cooling the metallic iron 20.

Here, the cooling part 120 has
a first part 121 for making methane gas contact the metallic iron 20 obtained by the reducing part 110 to carburize the metallic iron 20,
a second part 122 for making CO gas contact the metallic iron 20 at a downstream side from the first part 121 to carburize the metallic iron 20, and
a third part 123 for making methane gas or an inert gas contact the metallic iron 20 at a downstream side from the second part 122.

In the present embodiment, the above reducing step S1 is performed in the reducing part 110 and the cooling step S2 is performed at the cooling part 120. The reducing part 110 and cooling part 120 need only be configured to be able to respectively perform the reducing step S1 and cooling step S2. As shown in FIGS. 1 to 5, the reducing part 110 can be provided with a reducing gas supply opening 110a for supplying reducing gas and an outlet 110b for discharging the gas after the reduction reaction. Further, the first part 121 can be provided with a first cooling gas supply opening 121a for supplying cooling gas containing methane gas and a first cooling gas outlet 121b for discharging a reaction gas of metallic iron 20 and methane gas at the first part 121. Further, the second part 122 can be provided with a second cooling gas supply opening 122a for supplying a cooling gas containing a CO gas and a second cooling gas outlet 122b for discharging a reaction gas of the metallic iron 20 and CO gas at the second part 122. Further, the third part 123 can be provided with a third cooling gas supply opening 123a for supplying a cooling gas containing methane gas or an inert gas and a third cooling gas outlet 123b for discharging methane gas or an inert gas contacting the metallic iron 20 at the third part 123. The reducing part 110 and the cooling part 120 may be integrated or may be separate members. For example, as shown in FIG. 1, the reducing part 110 and cooling part 120 may be provided at the shaft furnace 100. Alternatively, as shown in FIG. 2, the reducing part 110 may be provided at the shaft furnace 100 while the cooling part 120 may be provided at a cooling device 200 at the downstream side from the shaft furnace 100. Alternatively, as shown in FIG. 3, the reducing part 110 and the first part 121 of the cooling part may be provided at the shaft furnace 100 while the second part 122 and the third part 123 of the cooling part may also be provided at the cooling device 200 at the downstream side from the shaft furnace 100. As shown in FIGS. 2 and 3, if the cooling device 200 is provided at the downstream side of the shaft furnace 100, the system for production of reduced iron may also be provided with a moving device 300 for making the metallic iron 20 move from the shaft furnace 100 to the cooling device 200. As specific examples of the moving device 300, a conveyor, cart, etc. may be mentioned. From the viewpoint of keeping down the capital costs, the reducing part 110 and cooling part 120 are preferably provided at the shaft furnace 100. In the system for production of reduced iron, if the cooling device 200 is provided, as a specific example of the cooling device 200, a cooling tower may be mentioned.

The reducing part 110 can be supplied with a reducing gas through the reducing gas supply opening 110a. Further, the first part 121 of the cooling part 120 can be supplied with methane gas through the first cooling gas supply opening 121a. Further, the second part 122 can be supplied with CO gas through the second cooling gas supply opening 122a. Furthermore, the third part 123 can be supplied with methane gas or an inert gas through the third cooling gas supply opening 123a. The individual gas supply systems are not particularly limited. For example, the gas sources and supply openings may be connected by piping etc. The type of the reducing gas etc. are as explained above. The reducing gas may, for example, be one containing hydrogen gas. The type of the gas supplied to the cooling part 120 etc. is as explained above.

The system for production of reduced iron according to the present embodiment may be provided with other components in addition to the above-mentioned reducing part 110 and cooling part 120. For example, the system for production of reduced iron according to the present embodiment may also be one having a dehydration device 130 for dehydrating the discharged gas of the reducing part 110 to obtain a circulating gas. Further, the system for production of reduced iron according to the present embodiment may also be one having a heating device 140 for raising the temperature of the discharged gas of the reducing part 110 or raising the temperature of the circulating gas obtained by dehydrating the discharged gas. Further, the heating device 140 may also be a device for raising the temperature of the discharged gas of the reducing part 110 or circulating gas obtained by dehydrating the discharged gas and hydrogen gas and producing a reducing gas containing one or both of the discharged gas and circulating gas and hydrogen gas. Further, the above-mentioned dehydration device 130 and heating device 140 may also be combined. For example, as shown in FIG. 4, the system for production according to one embodiment may also be provided with the dehydration device 130 for dehydrating the discharged gas from the reducing part 110 to obtain a circulating gas and a heating device 140 for raising the temperature of the circulating gas and hydrogen gas to obtain a reducing gas containing the circulating gas and hydrogen gas. The dehydration device 130 and heating device 140 are respectively ones which perform the above dehydration step S3 and heating step S4. Details are as explained above.

The discharged gas system from the reducing part 110 and the cooling part 120 is as explained above. For example, as shown in FIGS. 1 to 6, the system for production according to one embodiment may have a first cooling gas outlet 121b for discharging out of the system the reaction gas of the metallic iron 20 and methane gas at the first part 121 at the downstream side from the reducing part 110. Alternatively, as shown in FIG. 7, the system for production according to one embodiment may have the reducing part 110 and the first part 121 connected so that the reaction gas of the metallic iron 20 and methane gas at the first part 121 (corresponding to reaction gas at the above first step S21) is added to the reducing gas. Further, the system for production according to one embodiment may have a second cooling gas outlet 122b for discharging the reaction gas of the metallic iron and CO gas (corresponding to reaction gas at the above-mentioned second step S22) at the second part 122 at the downstream side from the first part 121. Further, the system for production according to one embodiment may have a third cooling gas outlet 123b for discharging out of the system the methane gas or an inert gas contacting the metallic iron 20 at the third part 123 at the downstream side from the second part 122.

The temperature of the metallic iron 20 at each of the reducing part 110 and the cooling part 120 is as explained above. For example, in the system for production according to one embodiment, at the first part 121, the temperature of the metallic iron 20 contacting the methane gas may be 700°C or more and 900°C or less. Further, the system for production according to one embodiment may also have a temperature of the metallic iron 20 contacting the CO gas at the second part 122 of 400°C or more and 600°C or less. Further, the system for production according to one embodiment may also have a temperature of the metallic iron 20 contacting the methane gas or an inert gas at the third part 123 of less than 400°C.

Further, in the system for production of the present disclosure, if the shaft furnace 100 is employed as the reducing part 110, the shaft furnace top pressure is not particularly limited, but it may be a gage pressure of a range of 0 MPa or more and 0.8 MPa or less. The pressure can, for example, be measured using a manometer provided at the shaft furnace top.

Further, in the system for production of the present disclosure, if the cooling tower is employed as the cooling part 120, the cooling tower top pressure is not particularly limited, but may be a gage pressure of a range of 0 MPa or more and 0.8 MPa or less. The pressure can, for example, be measured using a manometer provided at the cooling tower top.

In the system for production of the present disclosure, the aspects shown in FIGS. 1 to 7 may also be combined. For example, in the system for production shown in FIG. 1, the dehydration device 130 or the heating device 140 such as shown in FIG. 4 may be combined.

### 3. Advantageous Effect

As explained above, according to the method and system for producing reduced iron of the present embodiment, metallic iron 20 is obtained by reduction of the iron oxide feedstock 10, then (1) the metallic iron 20 is carburized and cooled by methane gas, next, (2) the metallic iron 20 is carburized by CO gas, then (3) the metallic iron 20 is cooled by methane gas or an inert gas. Due to this, it is possible to efficiently produce reduced iron 30 containing carbon (for example, CDRI with a raised carbon concentration).

### EXAMPLES

Below, examples will be shown while further explaining the present invention, but the present invention is not limited to the following examples. The present invention can employ various conditions so long as achieving the object without departing from its gist. In the following examples, the inventors studied the conditions for raising the amount of carburization of the reduced iron by numerical simulation. The numerical simulation in the present examples was performed by adding to the shaft furnace mathematical model developed applying the blast furnace mathematical model described in the following NPL 1 the reactions described in the following NPL 2 as (7), (9), and (10).
NPL 1: Nishioka et al., "Development of Mathematical Model of Blast Furnace", NSC & SMC Technical Reports, No. 410 (2018)
NPL 2: Hamzeh Hamadeh et al., "Detailed Modeling of the Direct Reduction of Iron Ore in a Shaft Furnace", Materials 2018, 11(10), 1865 (https://doi.org/10.3390/ma11101865)

### 1. Study of Case of Reducing Step and Cooling Step at Shaft Furnace

### 1.1. Simulation Method

Numerical simulation was performed assuming operation in a shaft furnace. First, H₂ at 950°C was blown at iron oxide pellets charged inside the shaft furnace to cause the reduction reaction to proceed. The temperature of the metallic iron right after the end of the reduction reaction was 858°C. After that, for a Case 2 and Case 4 (examples), CH₄ at 25°C was blown at the metallic iron to make carbon precipitate and simultaneously the metallic iron was cooled. After that, CO at 25°C gas was blown from the bottom part from a CH₄ blow opening to cause precipitation of carbon by the CO to proceed. After that, in each of the Case 1, Case 2, Case 3, and Case 4, CH₄ was further blown from the bottom part to make the temperature fall to the target temperature as CDRI.

### 1.2. Calculation Conditions

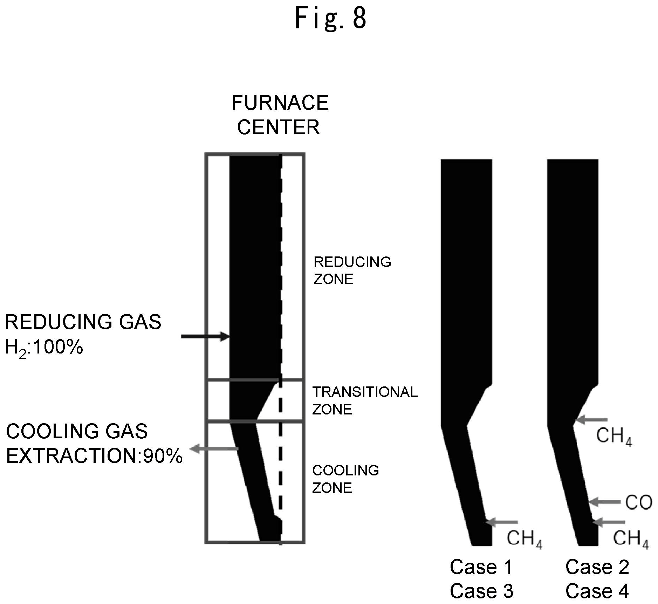

FIG. 8 shows the types of gas introduced to the cooling part of the shaft furnace and the introduction positions for each of the Cases 1 to 4. Further, the structure shown in FIG. 8 is the structure of the left half when dividing the furnace internal structure at the cross-section passing through the center axis of the shaft furnace and running along the center axis into a right half and a left half about the center axis of the shaft furnace.

For the Case 2 and Case 4, the reduction zone in FIG. 8 corresponds to the reducing step S1, the transition zone corresponds to the first step S21 of the cooling step S2, the top part of the cooling zone corresponds to the second step S22 of the cooling step S2, and the bottom part of the cooling zone corresponds to the third step S23 of the cooling step S2. In the Case 2 and Case 4, the discharged gas of the first step S21 was introduced as is to the reducing step S1. Further, the discharged gas of the second step S22 was extracted out of the system at the downstream side from the first step S21. Further, the discharged gas of the third step S23 was used as is as the cooling gas of the second step S22.

Details of Cases 1 to 4 are explained below.

Case 1 (comparative example): The first step S21 and second step S22 were not performed, while at the third step S23, CH₄ was blown in by a flow rate of 1400 Nm³ /min whereby the temperature of the reduced iron at the exit side in the third step S23 was lowered to the target temperature as CDRI. The pressure of the shaft furnace top was made 0.04 MPa (gage pressure).

Case 2 (example): At the first step S21, CH₄ was blown in by a flow rate of 300 Nm³ /min, at the second step S22, CO was blown in by a flow rate of 700 Nm³ /min, and at the third step S23, CH₄ was blown in by a flow rate of 1500 Nm³ /min, whereby the temperature of the reduced iron at the exit side in the third step S23 was lowered to the target temperature as CDRI. The pressure of the shaft furnace top was made 0.04 MPa (gage pressure).

Case 3 (comparative example): Except for changing the pressure of the shaft furnace top to 0.7 MPa (gage pressure), the same as Case 1.

Case 4 (example): At the first step S21, CH₄ was blown in by a flow rate of 300 Nm³ /min, at the second step S22, CO was blown in by a flow rate of 500 Nm³ /min, and at the third step S23, CH₄ was blown in by a flow rate of 1850 Nm³ /min, whereby the temperature of the reduced iron at the exit side in the third step S23 was lowered to the target temperature as CDRI. The pressure of the shaft furnace top was made 0.7 MPa (gage pressure).

### 1.3. Results of Calculation 1

The following table shows the results of calculation of the Case 1 and Case 2.

**[Table 1]**

| | | Case 1 | Case 2 |
|---|---|---|---|
| First step | CH4 gas amount [Nm³/min] | 0 | 300 |
| Second step | CO gas amount [Nm³/min] | 0 | 700 |
| Third step | CH4 gas amount [Nm³/min] | 1400 | 1500 |
| | Exit side temperature of reduced iron [°C] | 74.9 | 79.7 |
| Product reduced iron | Carbon concentration [mass%] | 2.4 | 3.2 |

From the results of Table 1, the following is learned. Further, in each of the Cases 1 and 2, the reduction rate at the product reduced iron was 93 to 94%, so a high reduction rate was secured.

In the Case 1 (comparative example), the reduced iron was discharged in the cooled state, but a sufficient amount of carburization could not be obtained.

In the Case 2 (example), the amount of carburization (carbon concentration) of the reduced iron discharged was high and the discharge temperature also fell to a practical sufficiently low temperature.

The following Table 2 shows the results of calculation of the Case 3 and Case 4.

**[Table 2]**

| | | Case 3 | Case 4 |
|---|---|---|---|
| First step | CH4 gas amount [Nm³/min] | 0 | 300 |
| Second step | CO gas amount [Nm³/min] | 0 | 500 |
| Third step | CH4 gas amount [Nm³/min] | 1400 | 1850 |
| | Exit side temperature of reduced iron [°C] | 75.0 | 77.5 |
| Product reduced iron | Carbon concentration [mass%] | 2.2 | 4.0 |

From the results of Table 2, the following will be learned. Further, in each of the Case 3 and Case 4, the reduction rate at the product reduced iron was 93 to 94% so a high reduction rate was secured.

In the Case 3 (comparative example), reduced iron was discharged in the cooled state, but a sufficient amount of carburization could not be obtained.

In the Case 4 (example), the amount of carburization (carbon concentration) of the reduced iron discharged was high and the discharge temperature could be lowered to a practically sufficiently low temperature either.

### 1.4. Results of Calculation 2

The inventors investigated the amount of carburization of the reduced iron discharged if changing the amount of the CH₄ blown in at the first step S21 so that the temperature of the metallic iron after the first step S21 at the Case 2 becomes 400 to 600°C or so (Cases 5 to 11). In each of the Cases 5 to 11, the flow rate of the CH₄ blown in at the first step S21 was as follows. The conditions of calculation and the results of calculation were shown in Table 3.

**[Table 3]**

| | | Case 5 | Case 6 | Case 7 | Case 8 | Case 9 | Case 10 | Case 11 |
|---|---|---|---|---|---|---|---|---|
| First step | CH4 gas amount [Nm³/min] | 200 | 250 | 300 | 350 | 400 | 500 | 700 |
| | Exit side temperature of metallic iron [°C] | 603.9 | 560.3 | 528.3 | 505.4 | 488.7 | 466.2 | 438.2 |
| Second step | CO gas amount [Nm³/min] | 700 | 700 | 700 | 700 | 700 | 700 | 700 |
| Third step | CH4 gas amount [Nm³/min] | 1500 | 1500 | 1500 | 1500 | 1500 | 1500 | 1500 |
| | Exit side temperature of reduced iron [°C] | 80.7 | 80.4 | 79.7 | 78.7 | 77.9 | 76.0 | 73.4 |
| Product reduced iron | Carbon concentration [mass%] | 2.9 | 3.1 | 3.2 | 3.3 | 3.3 | 3.2 | 3.1 |

As shown in Table 3, it is learned that if the temperature of the metallic iron after the first step is 400°C or more and 600°C or less, preferably 450°C or more and 550°C or less, the carbon concentration of the reduced iron finally obtained becomes particularly high. Further, in each of Cases 5 to 11, the reduction rate at the product reduced iron was 92 to 94%, so a high reduction rate was secured.

### 1.5. Results of Calculation 3

The inventors ran similar calculations when changing the amount of CH₄ blown in at the first step S21 in the Case 2 so that the temperature of the metallic iron after the first step S21 became 400 to 600°C or so and used nitrogen gas (flow rate: 1700 Nm³ /min) instead of CH₄ at the third step S23 (Cases 12 to 15). The conditions of calculation and the results of calculation were shown in Table 4.

**[Table 4]**

| | | Case 12 | Case 13 | Case 14 | Case 15 |
|---|---|---|---|---|---|
| First step | CH4 gas amount [Nm³/min] | 300 | 400 | 500 | 700 |
| | Exit side temperature of metallic iron [°C] | 525.0 | 472.6 | 443.3 | 411.3 |
| Second step | CO gas amount [Nm³/min] | 700 | 700 | 700 | 700 |
| Third step | N2 gas amount [Nm³/min] | 1700 | 1700 | 1700 | 1700 |
| | Exit side temperature of reduced iron [°C] | 80.1 | 77.6 | 75.3 | 69.9 |
| Product reduced iron | Carbon concentration [mass%] | 2.9 | 3.1 | 3.1 | 2.9 |

As shown in Table 4, even if using nitrogen gas or another inert gas at the third step S23, the carbon concentration of the reduced iron finally obtained does not fall much at all. Further, in each of Cases 12 to 15, the reduction rate at the product reduced iron was 92 to 94%, so a high reduction rate was secured.

### 2. Study of Case of Performing Reducing Step at Shaft Furnace and Cooling Step at Cooling Tower

### 2.1. Simulation Conditions 1

### 2.1.1. Comparative Example 1

The simulation conditions according to Comparative Example 1 were similar to the above Case 1. That is, first, 950°C H₂ was blown at iron oxide pellets charged in the shaft furnace to make the reduction reaction proceed. The temperature of the metallic iron right after the end of the reduction reaction was 858°C. After that, 25°C CH₄ was blown at the metallic iron to cause precipitation of carbon and simultaneously the metallic iron was cooled to obtain the product reduced iron. The shaft furnace top pressure was made 0.04 MPa (gage pressure). The amount of supply of CH₄, the temperature of the product reduced iron, and the carbon concentration were as shown in the following Table 5.

### 2.1.2. Example 1

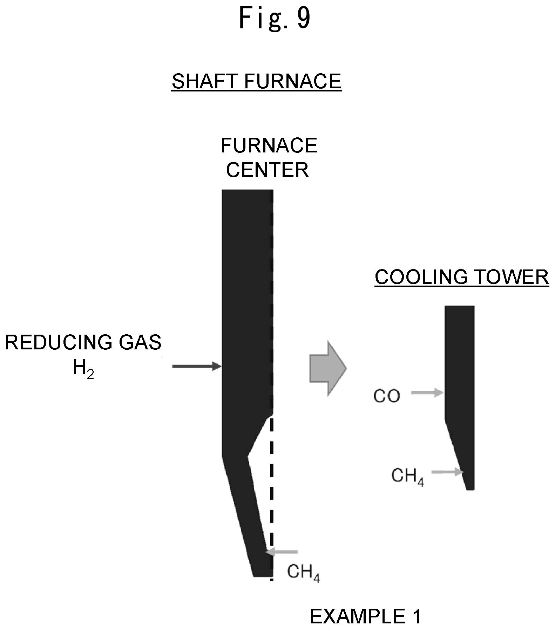

Numerical simulation was performed assuming the case of performing the operation combining a shaft furnace and a cooling tower. FIG. 9 shows the types of gas introduced to the shaft furnace and the cooling tower and the introduction positions. Further, the structure shown in FIG. 9 is the structure of the left half when dividing the furnace internal structure at the cross-section passing through the center axis of the shaft furnace or cooling tower and running along the center axis into a right half and a left half about the center axis of the shaft furnace or the cooling tower. First, 950°C H₂ was blown at the iron oxide pellets charged inside the shaft furnace to make the reduction reaction proceed. The temperature of the metallic iron right after the end of the reduction reaction was 858°C. After that, 25°C CH₄ was blown at the metallic iron to make carbon precipitate and simultaneously cool the metallic iron. The temperature of the metallic iron at the exit side of the shaft furnace was 533.6°C. The amount of supply of CH₄ at the shaft furnace was as shown in the following Table 5. After that, metallic iron recovered from the exit side of the shaft furnace was charged from the top of the cooling tower, 25°C CO was blown in at the downstream side from the furnace top to make carbon precipitate, and 25°C CH₄ was blown in at the further downstream side from that to cool the metallic iron and obtain the product reduced iron. The shaft furnace top pressure and the cooling tower top pressure were made 0.04 MPa (gage pressure). The amounts of supply of CO and CH₄ , the temperature of the product reduced iron, and the carbon concentration at the cooling tower were as shown in the following Table 5.

### 2.1.3. Example 2

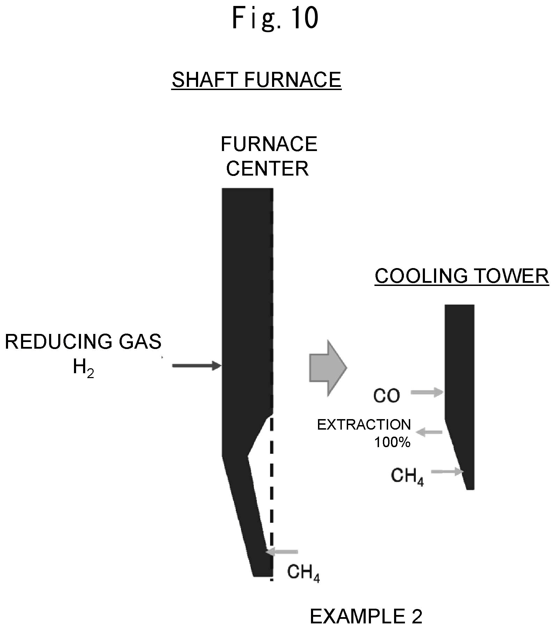

As shown in FIG. 10, simulation was performed in the same way as Example 1 except for extracting 100% of the cooling exhaust gas by the CH₄ between the position of supply of CO and the position of supply of CH₄ at the cooling tower. The amounts of supply of CO and CH₄ , the temperature of the product reduced iron, and the carbon concentration at the cooling tower were as shown in the following Table 5.

### 2.2. Results of Calculation

The following Table 5 shows the results of calculation at Comparative Example 1 and Examples 1 and 2. Further, in each of Comparative Example 1 and Examples 1 and 2, the reduction rate of the product reduced iron was 93% or more.

**[Table 5]**

| | | Comp. Ex. 1 | Ex. 1 | Ex. 2 |
|---|---|---|---|---|
| Shaft furnace | CH4 gas amount [Nm³/min] | 1400 | 200 | 200 |
| Cooling tower | CO gas amount [Nm³/min] | - | 700 | 700 |
| | CH4 gas amount [Nm³/min] | - | 1500 | 1500 |
| Product reduced iron | Temperature [°C] | 74.9 | 39.8 | 74.1 |
| | Carbon concentration [mass%] | 2.4 | 3.04 | 3.6 |

From the results of Table 5, the following will be understood.

With just the iron oxide feedstock being reduced and the metallic iron being cooled by methane gas in the shaft furnace like in Comparative Example 1, the carbon concentration of the product reduced iron cannot be sufficiently raised. As opposed to this, by the iron oxide feedstock being reduced and the metallic iron being cooled in the shaft furnace and then the metallic iron being carburized by CO gas in a cooling tower provided separate from the shaft furnace and further the metallic iron being cooled by methane gas at the downstream side of the cooling device like in Examples 1 and 2, it is possible to improve the carbon concentration of the product reduced iron. That is, the reduced iron containing carbon (for example, CDRI raised in carbon concentration) can be efficiently produced. In particular, by extracting cooling exhaust gas by CH₄ between the supply position of CO and the supply position of CH₄ of the cooling tower like in Example 2, the carbon concentration of the product reduced iron is improved more. Further, by the shaft furnace and the cooling tower being separately provided like in Examples 1 and 2, it is possible to avoid the exhaust gas at the cooling tower entering the shaft furnace.

### 2.3. Simulation Conditions 2

In Comparative Example 2, the conditions are the same as the above Case 3, that is, the conditions are the same as Comparative Example 1 except for making the shaft furnace top pressure 0.7 MPa (gage pressure). In Example 3, the conditions are the same as Example 1 except for making the shaft furnace top pressure 0.7 MPa (gage pressure). In Example 4, the conditions are the same as Example 1 except for making the shaft furnace top pressure and the cooling tower top pressure 0.7 MPa (gage pressure).

### 2.4. Results of Calculation

The following Table 6 shows the results of calculation at Comparative Example 2 and Examples 3 and 4. Further, in each of Comparative Example 2 and Examples 3 and 4, the reduction rate of the product reduced iron was 93% or more.

**[Table 6]**

| | | Comp. Ex. 2 | Ex. 3 | Ex. 4 |
|---|---|---|---|---|
| Shaft furnace | CH4 gas amount [Nm³/min] | 1400 | 200 | 200 |
| Cooling tower | CO gas amount [Nm³/min] | - | 700 | 700 |
| | CH4 gas amount [Nm³/min] | - | 1500 | 1500 |
| Product reduced iron | Temperature [°C] | 75.0 | 39.9 | 50.3 |
| | Carbon concentration [mass%] | 2.2 | 2.83 | 4.4 |

From the results of Table 6, the following will be understood.

With just the iron oxide feedstock being reduced and the metallic iron being cooled by methane gas in the shaft furnace like in Comparative Example 2, the carbon concentration of the product reduced iron cannot be sufficiently raised. As opposed to this, by the iron oxide feedstock being reduced and the metallic iron being cooled in the shaft furnace and then the metallic iron being carburized by CO gas in a cooling tower provided separate from the shaft furnace and further the metallic iron being cooled by methane gas at the downstream side of the cooling device like in Examples 3 and 4, it is possible to improve the carbon concentration of the product reduced iron. That is, the reduced iron containing carbon (for example, CDRI raised in carbon concentration) can be efficiently produced. Further, by the shaft furnace and the cooling tower being separately provided like in Examples 3 and 4, it is possible to avoid the exhaust gas at the cooling tower entering the shaft furnace.

Further, even in the case of using nitrogen gas instead of CH₄ at the cooling tower, by performing similar calculations, the results of the calculation tended to become similar to the results shown in Table 5. That is, even if using nitrogen gas or another inert gas at the cooling tower, there is little drop in the carbon concentration of the reduced iron finally obtained.

### 3. Summary

From the above results, it can be said that by going through the following reducing step and cooling step, it is possible to efficiently produce reduced iron containing carbon.

At the reducing step, reducing gas is made to contact the iron oxide feedstock to obtain the metallic iron. At the cooling step, the metallic iron is cooled. Here, the cooling step has a first step of making methane gas contact the metallic iron after the reducing step to carburize the metallic iron, a second step of making CO gas contact the metallic iron after the first step to carburize the metallic iron, and a third step of making methane gas or an inert gas contact the metallic iron after the second step.

### REFERENCE SIGNS LIST

10 iron oxide feedstock
20 metallic iron
30 reduced iron containing carbon
100 shaft furnace
   100a feedstock supply opening
   100b outlet
110 reducing part
   110a reducing gas supply opening
   110b reducing gas outlet
120 cooling part
121 first part
   121a first cooling gas supply opening
   121b first cooling gas outlet
122 second part
   122a second cooling gas supply opening
   122b second cooling gas outlet
123 third part
   123a third cooling gas supply opening
   123b third cooling gas outlet
200 cooling device

## Claims

1. A method for producing reduced iron containing carbon, the method comprising
a reducing step of bringing a reducing gas into contact with iron oxide feedstock to obtain metallic iron and
a cooling step of cooling the metallic iron, wherein
the cooling step includes
a first step of bringing methane gas into contact with the metallic iron after the reducing step to carburize the metallic iron,
a second step of bringing CO gas into contact with the metallic iron after the first step to carburize the metallic iron, and
a third step of bringing methane gas or an inert gas into contact with the metallic iron after the second step.

2. The method for producing reduced iron according to claim 1, wherein
the reducing step and the cooling step are performed in a shaft furnace.

3. The method for producing reduced iron according to claim 1, wherein
the reducing step is performed in a shaft furnace and
the cooling step is performed in a cooling device downstream of the shaft furnace.

4. The method for producing reduced iron according to claim 1, wherein
the reducing step and the first step are performed in a shaft furnace and
the second step and the third step are performed in a cooling device downstream of the shaft furnace.

5. The method for producing reduced iron according to claim 3 or 4, wherein the method includes
a moving step of moving the metallic iron from the shaft furnace to the cooling device.

6. The method for producing reduced iron according to any one of claims 1 to 5, wherein
the reducing gas contains hydrogen gas.

7. The method for producing reduced iron according to any one of claims 1 to 6, wherein the method includes
a dehydration step of dehydrating discharged gas of the reducing step to obtain a circulating gas and
a heating step of raising a temperature of the circulating gas and hydrogen gas and obtaining a reducing gas containing the circulating gas and the hydrogen gas.

8. The method for producing reduced iron according to any one of claims 1 to 7, wherein
a reaction gas of the metallic iron and the methane gas at the first step is discharged outside the system downstream of the reducing step.

9. The method for producing reduced iron according to any one of claims 1 to 8, wherein
a reaction gas of the metallic iron and the methane gas at the first step is added to the reducing gas.

10. The method for producing reduced iron according to any one of claims 1 to 9, wherein
a reaction gas of the metallic iron and the CO gas at the second step is discharged outside the system downstream of the first step.

11. The method for producing reduced iron according to any one of claims 1 to 10, wherein
the methane gas or an inert gas contacting the metallic iron at the third step is discharged outside the system downstream of the second step.

12. A system for producing reduced iron containing carbon, the system comprising
a reducing part for bringing a reducing gas into contact with iron oxide feedstock to obtain metallic iron and
a cooling part for cooling the metallic iron, wherein
the cooling part has
a first part for bringing methane gas into contact with the metallic iron obtained by the reducing part to carburize the metallic iron,
a second part for bringing CO gas into contact with the metallic iron downstream of the first part to carburize the metallic iron, and
a third part for bringing methane gas or an inert gas into contact with the metallic iron downstream of the second part.

13. The system for producing reduced iron according to claim 12, wherein
the reducing part and the cooling part are provided at a shaft furnace.

14. The system for producing reduced iron according to claim 12, wherein
the reducing part is provided at a shaft furnace and
the cooling part is provided at a cooling device downstream of the shaft furnace.

15. The system for producing reduced iron according to claim 12, wherein
the reducing part and the first part are provided at a shaft furnace and
the second part and the third part are provided at a cooling device downstream of the shaft furnace.

16. The system for producing reduced iron according to claim 14 or 15, wherein
the system has a moving device for moving the metallic iron from the shaft furnace to the cooling device.

17. The system for producing reduced iron according to any one of claims 12 to 16, wherein the reducing gas contains hydrogen gas.

18. The system for producing reduced iron according to any one of claims 12 to 17, wherein the system has
a dehydration device for dehydrating discharged gas from the reducing part to obtain a circulating gas and
a heating device for raising a temperature of the circulating gas and hydrogen gas and obtaining a reducing gas containing the circulating gas and the hydrogen gas.

19. The system for producing reduced iron according to any one of claims 12 to 18, wherein
the system has a first cooling gas outlet for discharging the reaction gas of the metallic iron and methane gas at the first part to outside the system downstream of the reducing part.

20. The system for producing reduced iron according to any one of claims 12 to 19, wherein
the reducing part and the first part are connected so that the reaction gas of the metallic iron and the methane gas at the first part is added to the reducing gas.

21. The system for producing reduced iron according to any one of claims 12 to 20, wherein
the system has a second cooling gas outlet for discharging the reaction gas of the metallic iron and CO gas at the second part to outside the system.

22. The system for producing reduced iron according to any one of claims 12 to 21, wherein
the system has a third cooling gas outlet for discharging the methane gas or an inert gas contacting the metallic iron at the third part to outside the system downstream of the second part.
